# EUROPEAN PATENT SPECIFICATION

(11) **EP 3 793 340 B1**
(45) Date of publication and mention of the grant of the patent: **13.07.2022**
(21) Application number: 19802775.7
(22) Date of filing: 13.05.2019
(51) Int. Cl.: A01C 5/02, A01C 15/02

(54) **SEEDLING PLANTING TOOL AND FERTILIZER DISPENSER**
SETZLINGSPFLANZWERKZEUG UND DÜNGERSPENDER
OUTIL DE PLANTATION DE SEMIS ET DISTRIBUTEUR D'ENGRAIS

(30) Priority: 15.05.2018 SE 1850566
(43) Date of publication of application: 24.03.2021
(73) Proprietor: Indvelop AB, 461 38 Trollhättan (SE)
(72) Inventor: LINDSTRÖM, Thomas, 932 94 Lövånger (SE); ÖHLUND, Jonas, 905 91 Umeå (SE)
(74) Representative: AWA Sweden AB
(86) International application number: PCT/SE2019/050424
(87) International publication number: WO 2019/221657

(56) References cited:
- WO-A1-2004/107841
- WO-A1-2004/107841
- WO-A2-2007/014441
- AU-A1- 2010 202 833
- AU-A1- 2016 200 375
- CN-U- 201 682 778
- CN-U- 206 413 394
- CN-U- 206 413 394
- FR-A1- 2 566 227
- FR-A1- 2 566 227
- SE-B- 467 337
- US-A1- 2016 037 711
- US-A1- 2016 037 711

## Description

### Field of the invention

The present invention relates to a seedling planting tool and a dispenser for automatic dispensing of a predetermined dosage of granular fertilizer during a planting operation.

### Background of the invention

Forest planting is to a large degree done by manual labour. Planting tools are available that speed up and make the work easier. A well known planting tool is Pottiputki^{tm} [https://shop.pottiputki.se/]. A Pottiputki planting tool, and similar designs, consists of a tube that can be forced into the soil or ground and a jaw -like structure that can be opened up after being forced into the ground. A seedling is introduced into the tube and dropped into the hole made by the jaw-like structure. Fertilization is an important part of forestry, not at least at or in close connection to planting. For a number of reasons, not at least to avoid leakage of fertilizing substances or overuse of fertilizers, it is desirable to provide the fertilizer to each seedling individually and in a controlled dosage. This could be done by introducing a fertilizer into the planting tube in connection with the planting. This adds a number of time consuming steps manual steps in the procedure. In addition the manual handling of the fertilizer is often unwanted.

A number of dispensers are available for using when planting the seedlings.

Planting tools having fertilizer dispensers are known from WO2004107841 and CN20641339U. Also these dispensers introduce a number of additional steps. In addition the dispenser may fail in that they do not provide the fertilizer at the optimum position, i.e. in close proximity to the root system. The commercially available dispenser are often difficult to combine with the planting tools of Pottiputki-type.

### Summary of the invention

The object of the invention is to provide a planting tool which provides an effective fertilization of a seedling at planting without introducing additional operations for a user to perform. A further object is to provide equipment that can withstand the often harsh environment associated to forest planting.

This is achieved by the planting tool comprising a dispenser as defined in claim 1.

The dispenser according to the invention is adapted for providing a dosage of granulated fertilizer to a seedling upon planting of the seedling and to be mounted on a planting tool with a hollow tube. The dispenser comprises a housing with an inlet for receiving a container with granulated fertilizer and a dosage mechanism for providing a predetermined amount of granulated fertilizer from the inlet to an outlet. The outlet is arranged to provide the predetermined amount of fertilizer into the tube of the planting tool.

According to one embodiment the dosage mechanism comprises a dosage wheel with a dosage space. The dosage space has a wedge bottom so that the dosage space on one side is in line with the outer cylindrical surface of the dosage wheel and the opposite side of the dosage space is depressed from the cylindrical outer surface. Tthe dosage wheel may further comprises a cut out positioned opposite on the cylindrical surface of the dosage wheel from the dosage space.

According to one embodiment a bolt for operating the dosage wheel is arranged fixed to the dosage wheel. The bolt extends through an opening in the dispenser housing, the opening having a semi-circular shape.

According to one embodiment of the invention the planting tool comprises a release rod in connection with a movable jaw and controlling the retraction of the movable jaw, an arm attached to the release rod. The arm is acting on the bolt for actuating the rotation of the dosage wheel, thereby providing a simultaneous action of opening the movable jaw and releasing a dosage of fertilizer from the dispenser outlet into the tube.

Thanks to the invention a precise and predetermined dosage of granulated is automatically provided to each seedling during planting.

One advantage of the present invention is that the dispenser may be mounted on existing planting tools, such existing planting tools being proven and appreciated in the field.

A further advantage is that the operator does not need to handle the fertilizer manually.

A still further advantage is the modular design of the dispenser. It can be readily adapted to different sizes and shapes of the planting tool and also to different dosages of granular fertilizer.

The invention optimizes the uses of fertilizer which has both economical and environmental implications.

The planting tool and dispenser assembly according to the invention is particularly useful for planting seedlings of spruce, pine and fir.

In the following, the invention will be described in more detail, by way of example only, with regard to non-limiting embodiments thereof, reference being made to the accompanying drawings.

### Brief description of the drawings

Fig. 1a-b are perspective schematic views of the dispenser according to the invention, a) in an a exploded view and b) illustrating the housing in a view showing the opposite side;
Fig. 2 a-b are schematic illustrations of the dosage wheel of the dispenser according to the invention, a) perspective view and b) frontal view;

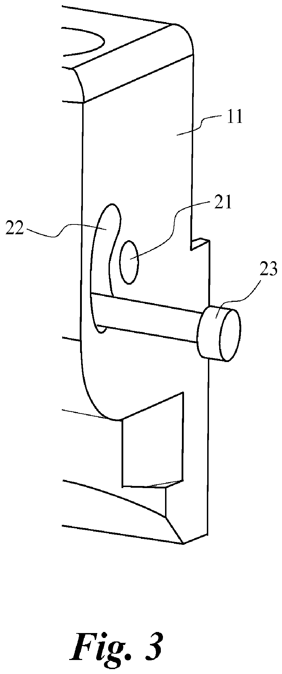

Fig. 3 is a schematic illustration of the a part of the dispenser according to the invention;
Fig. 4 a-b are schematic illustrations of the planting tool and dispenser assembly according to the invention; and
Fig. 5 is a schematic illustration of the planting/fertilizing operation using the planting tool and dispenser assembly according to the invention.

### Detailed description

Terms such as "top", "bottom", upper", lower", "below", "above" etc are used merely with reference to the geometry of the embodiment of the invention shown in the drawings and/or during normal operation of the planting tool with a dispenser and are not intended to limit the invention in any manner.

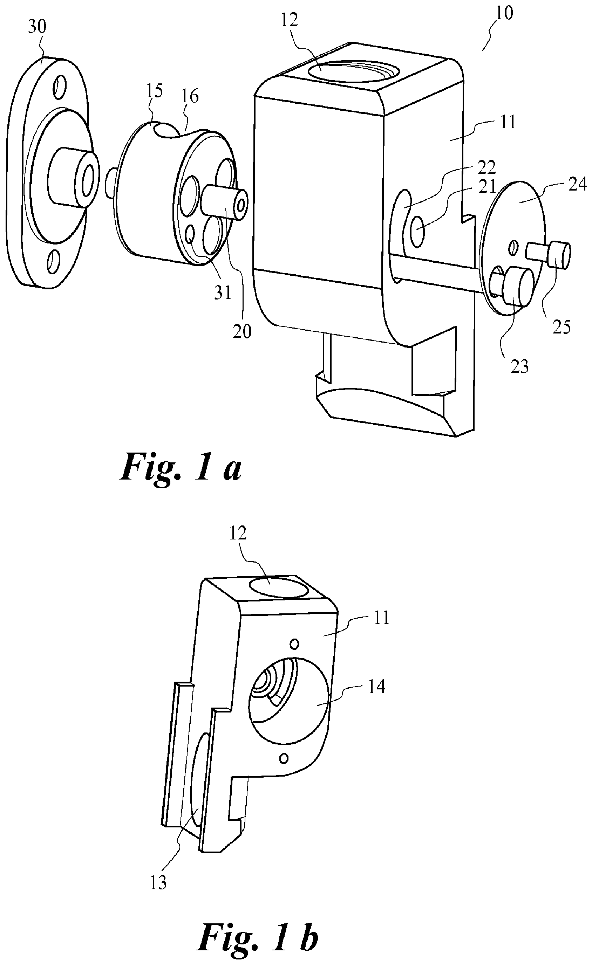

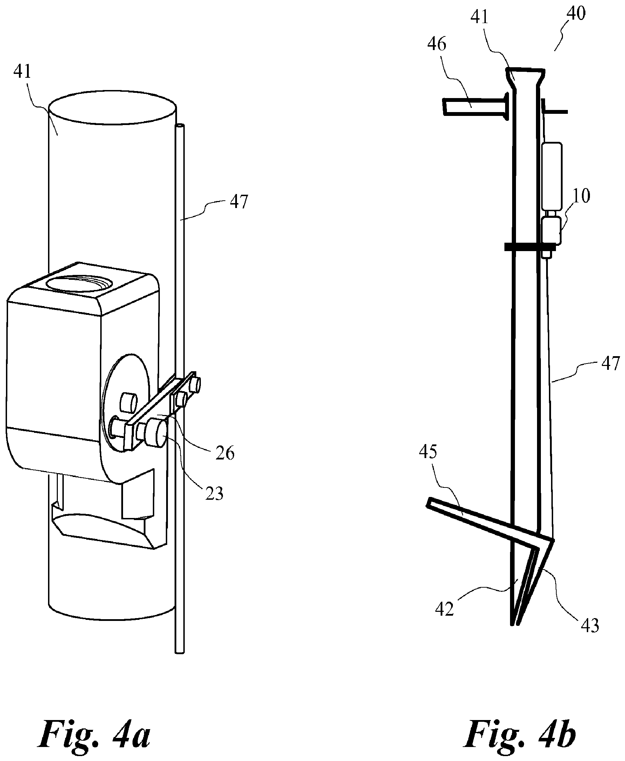

Figures 1 a-b schematically illustrate the dispenser 10 according to the invention. The dispenser is designed to be mounted on a planting tool as illustrated in Figures 4 a-b. The planting tool 40 comprises a hollow tube 41. Typically the tube 41 has a circular cross section, but also oval, rectangular and polygon shapes are possible. The dispenser 10 comprises a housing 11 with an inlet 12 for receiving a container (not shown) providing fertilizer in granulated form to the dispenser 10. The inlet 12 may be threaded and the container provided with a corresponding thread. The container may alternatively be fitted to the dispenser with a bayonet coupling, a snap lock, or just friction, for example. The dispenser 10 has an outlet 13 for letting out a dosage of granular fertilizer. Preferably the outlet 13 has a downward inward direction corresponding to an opening in the tube 41 for providing the dosage of the granular fertilizer on the inside of the tube 41. Alternatively and not falling within the scope of the claims, the outlet 13 is directed downward to deliver the granular fertilizer outside the tube 41. In this alternative the dispenser 10 may be equipped with a tube or hose attached to the outlet 13 to better direct the granular fertilizer close to a seedling when planting.

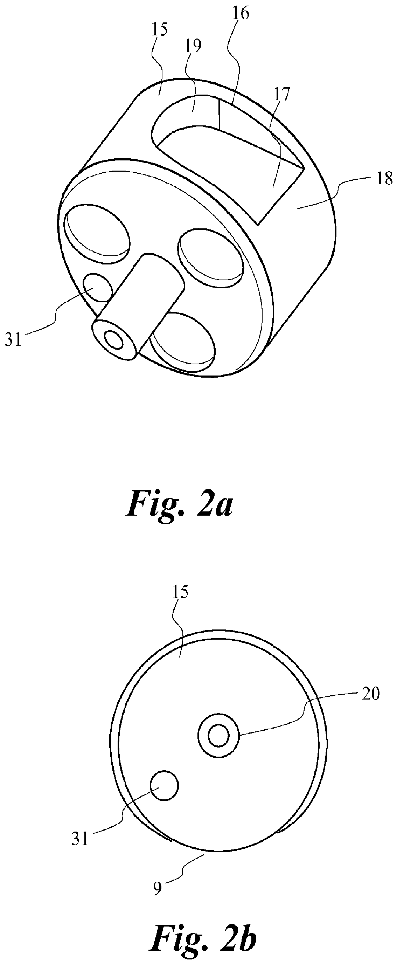

The inlet 12 and outlet 13 are connected via a cylindrical cavity 14. A dosage wheel 15 is fitted in the cylindrical cavity 14. As illustrated in figure 2 the dosage wheel 15 has a dosage space 16 on, and contained in, the cylindrical surface. The dosage space 16 occupies preferably an area of the cylindrical surface that corresponds to the area of the inlet 12. The depth, and hence the volume of the dosage space should preferably be chosen as to result in the desired dosage of the granular fertilizer. It is possible to provide exchangeable dosage wheels 15 with different volumes of the dosage space 16 in order to comply to different requirements of fertilizer dosage. According to one embodiment the bottom surface 17 of the dosage wheel 15 is weedged so that the front side 18, the side being in front with regards to the rotational direction of the dosage wheel 15, is in line with the cylindrical surface and the opposite side 19 is depressed the distance YY mm from the cylindrical surface. This design facilitates that the granular fertilizer is delivered out from the dispenser with a minimal risk of getting stuck to the dosage wheel.

The dosage wheel 15 may have a cut out 9 reducing the radius in the order of a few millimetres and positioned approximately opposite the dosage space 16. The cut out 9 should not stretch too close to the dosage space 16 in order to secure a sufficient sealing of the dosage wheel 15 with the cylindrical cavity 14, so that fertilizer grains do not leak out of the dosage space 16. The purpose of the cut out is to lower the friction of the dosage wheel against the cylindrical cavity.

A central axis 20 of the dosage wheel 15 may, as depicted, be an integral part of the dosage wheel 15 or alternatively an axis is provided as a separate unit. The housing 11 is provided with a hole 21 centred in the cylindrical cavity 14 for accommodating the central axis 20. A cover plate 30 is fixed to the housing, for example with screws, and covers the cylindrical cavity 14 and is provided with a hole accommodating the central axis 20 of the dosage wheel 15. The housing 11 has here been described as closed on one side and open to the cylindrical cavity 14 on the opposite side, covered by the cover plate 30. As apparent to the skilled person, the housing could be open to the cylindrical cavity 14 on both sides and the dispenser having cover plates on both sides.

The housing has an opening 22 extending in a circular direction centred at the hole 21, i.e. having a semi-circular extension. A pin or bolt 23 for manoeuvring the dosage wheel 15 is provided through the opening 22 and is fixed to the dosage wheel 15, for example screwed into a threaded hole 31 in the dosage wheel. Alternatively the bolt 23 is an integral part of the dosage wheel 15 and extending through the opening 22 out from the housing 11. The extension of the opening 22 is such that at a first end point the dosage space 16 will be positioned under the inlet 12 and at the other endpoint the dosage space 16 will be positioned at the outlet 13. A washer 24 may be provided to cover the opening 22 and the hole 21, the washer 24 fixed with a screw 25, for example. The bolt 23 will provide the rotary translation of the dosage wheel 15 from the first position with the dosage space under the inlet 12 to the second position with the dosage space positioned at the outlet 13.

Figures 4 a-b schematically illustrate the planting tool and dispenser according to the invention. The dispenser 10 is mounted on the planting tool 40, preferably so that the outlet of the dispenser 10 corresponds to an opening in the tube 40 of the planting tool 40 so that a dosage of granular fertilizer may be released into the tube.

The tube 41 of the planting tool 40 is at a top end provided with a handle 46 and in the opposite end, ending in a fixed jaw 42 which together with a moveable jaw 43 forms a cone that can be forced into the ground. The moveable jaw 43 is via a hinge 44 attached to a pedal 45 arranged to move the movable jaw 43 outwards when it is pressed down. A release rod 47 is attached to the movable jaw 43 and hence arranged to move in the opposite direction from the pedal 45. The release rod 47 is in connection with a locking mechanism close to the handle 46. The locking mechanism is arranged to fix the release rod 47 in an upper position and thereby keep the moveable jaw 43 in an open position until the locking function is deactivated.

As illustrated in the schematic drawing of figure 4a, an arm 26 is attached to the release rod 47 at a position given by the position of the mounted dispenser 10. The arm 26 extends from the release rod 47 to the bolt 23 manoeuvring the dosage wheel 15 of the dispenser 10. The bolt 23 is rotably connected to the arm 26, for example going through a through hole in the arm 26. The arm 26 is fastened to the release rod 47 at a position so that the bolt 23 abutting or being close to the downward end of the opening 22 corresponds to the rod being in its relaxed position, i.e. the planting tool being closed. The other extreme position, the pedal 45 being pushed down and the release rod 47 being locked in an upper position, corresponds to the bolt 23 being close to or abutting the upper end of the opening 22. The length of movement in the vertical direction of the bolt 23, which in turn is set by the dimensions of the dispenser 10, must correspond to the movement of the release rod 47. Hence, as appreciated by the skilled person, the dimensions of dispenser 10 must be chosen so as to match the planting tool 40. The planting tool 40 is typically manufactured in a few different sizes and the dispenser 10 accordingly needs to be available in corresponding sizes. Given the information herein the skilled person knows how to design a dispenser suitable for a particular size and/or model of a planting tool 40.

The opening 22 being in the shape of a semicircle will force the bolt 23 to move in a direction transverse to the vertical direction and the direction of the moment of the release rod 47. This transverse movement may be taken up by tolerances in the design and/or the flexibility of the parts, for example the release rod 47 being somewhat flexible. Alternatively the hole in the arm 26 accommodating the bolt 23 is extended in the transverse direction, thereby taking up the transverse movement of the bolt 23.

According to one embodiment the arm 26 comprises of two or more parts that are spring loaded with an outward force as seen from the release rod 47. Thereby the arm 26 may expand and retract depending on the position of the bolt 23 in the opening 22 and mitigate the transversal tension on the release rod 47.

According to one embodiment the upper end of the opening 22 is positioned at around 8° or more from a thought vertical line passing thorough the centre of the central axis 20, to accommodate that there will be an inward force on the bolt 23 from the release rod 47 as the bolt 23 follows the semi-circular path of opening 22.

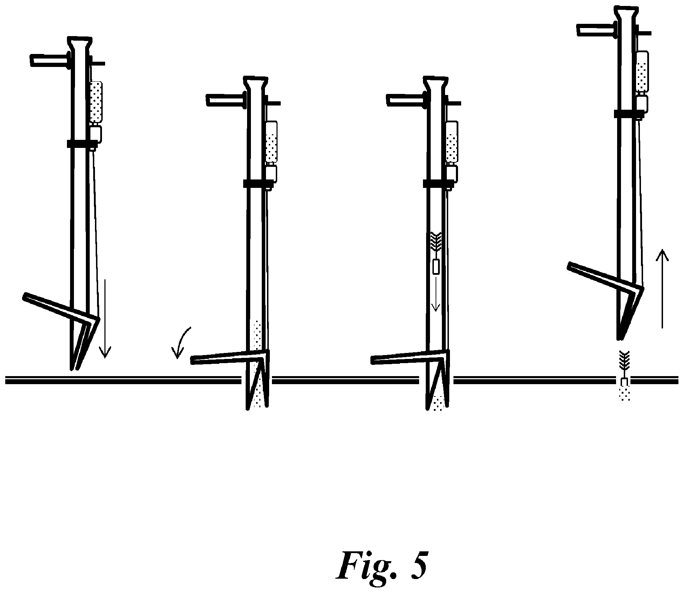

Figure 5 schematically illustrate the use of the planting tool and dispenser assembly. A planting action comprises the steps of:
1) The planting tool 40 is forced into the ground.
2) The pedal 45 is pushed down resulting in the simultaneous actions of opening the jaws of the planting tool and activating the dispenser to deliver a dosage of the granulated fertilizer into the tube.
3) The seedling is dropped down into the tube 41.
4) The planting tool 40 is lifted up from the ground and the release rod released, which causes both the jaws to close and the dispenser to be loaded with a new load of granulated fertilizer.

## Claims

1. A planting tool comprising:
a hollow tube (41) for receiving a seedling;
a movable jaw (43) arranged at an end portion of the hollow tube;
a pedal (45) configured to move the movable jaw when pressed downward, thereby allowing the seedling to exit the hollow tube;
a release rod (47) operably connected to the movable jaw; and
a dispenser (10) configured to provide a predetermined amount of granulated fertilizer to the seedling upon planting of the seedling, wherein the dispenser comprises:
a housing (11) with an inlet (12) for receiving a container accommodating the granulated fertilizer and an outlet (13) connected to the hollow tube, and
a dosage mechanism arranged in the housing and configured to deliver the predetermined amount of the granulated fertilizer from the inlet (12) to the outlet (13),
**characterized in that** the release rod is configured to reciprocate along the hollow tube upon movement of the movable jaw, and **in that** the release rod is operably connected to the dosage mechanism such that, upon movement of the movable jaw, the dosage mechanism performs a back-and-forth movement to provide the predetermined amount of the granulated fertilizer into the hollow tube via the outlet.

2. The planting tool according to claim 1, wherein the dosage mechanism of the dispenser (10) comprises a dosage wheel (15) with a dosage space (16), the dosage space having a wedge bottom so that the dosage space on one side is in line with an outer cylindrical surface of the dosage wheel and the opposite side of the dosage space is depressed from the outer cylindrical surface.

3. The planting tool according to claim 2, wherein the outer cylindrical surface of the dosage wheel (15) comprises a cut-out arranged opposite to the dosage space (16).

4. The planting tool according to claim 2 or 3, further comprising a bolt (23) for operating the dosage wheel (15), wherein the bolt is fixed to the dosage wheel (15) and extending through an opening in the dispenser housing (11), the opening (22) having a semi-circular shape.

5. The planting tool according to claim 4, wherein the release rod (47) is further configured to control the movement of the movable jaw (43), and wherein the planting tool further comprises an arm (26) attached to the release rod (47) and configured to act on the bolt (23) for actuating the rotation of the dosage wheel (15), thereby providing a simultaneous action of opening the movable jaw (43) and releasing the predetermined amount of fertilizer from the dispenser outlet (13) into the tube (41).

6. The planting tool according to any of the preceding claims, wherein the dispenser is configured to be releasably attached to the hollow tube of the planting tool.

## Patentansprüche

1. Pflanzwerkzeug, Folgendes umfassend:
ein hohles Rohr (41) zur Aufnahme eines Setzlings;
eine bewegliche Backe (43), die an einem Endabschnitt des hohlen Rohrs angeordnet ist;
ein Pedal (45), das dazu ausgelegt ist, die bewegliche Backe zu bewegen, wenn es nach unten gedrückt wird, wodurch zugelassen wird, dass der Setzling aus dem hohlen Rohr austritt;
eine Lösestange (47), die mit der beweglichen Backe wirkverbunden ist; und
einen Spender (10), der dazu ausgelegt ist, beim Pflanzen des Setzlings dem Setzling eine festgelegte Menge Düngemittelgranulat bereitzustellen, wobei der Spender Folgendes umfasst:
ein Gehäuse (11) mit einem Einlass (12) zur Aufnahme eines Behälters, der das Düngemittelgranulat beinhaltet, und einem Auslass (13), der mit dem hohlen Rohr verbunden ist, und
einen Dosiermechanismus, der im Gehäuse angeordnet und dazu ausgelegt ist, die festgelegte Menge des Düngemittelgranulats vom Einlass (12) zum Auslass (13) zu liefern,
**dadurch gekennzeichnet, dass** die Lösestange dazu ausgelegt ist, sich bei der Bewegung der beweglichen Backe entlang des hohlen Rohrs auf und ab zu bewegen, und
dadurch, dass die Lösestange mit dem Dosiermechanismus wirkverbunden ist, sodass bei der Bewegung der beweglichen Backe der Dosiermechanismus eine Vorwärts-Rückwärts-Bewegung ausführt, um die festgelegte Menge Düngemittelgranulat über den Auslass in das hohle Rohr abzugeben.

2. Pflanzwerkzeug nach Anspruch 1, wobei der Dosiermechanismus des Spenders (10) ein Dosierrad (15) mit einem Dosierraum (16) umfasst, wobei der Dosierraum einen Keilboden aufweist, sodass der Dosierraum auf einer Seite mit einer zylindrischen Außenfläche des Dosierrads ausgerichtet ist und die entgegengesetzte Seite des Dosierraums von der zylindrischen Außenfläche vertieft ist.

3. Pflanzwerkzeug nach Anspruch 2, wobei die zylindrische Außenfläche des Dosierrads (15) einen Ausschnitt umfasst, der dem Dosierraum (16) entgegengesetzt angeordnet ist.

4. Pflanzwerkzeug nach Anspruch 2 oder 3, ferner einen Bolzen (23) zum Betätigen des Dosierrads (15) umfassend, wobei der Bolzen an dem Dosierrad (15) befestigt ist und sich durch eine Öffnung im Spendergehäuse (11) erstreckt, wobei die Öffnung (22) halbkreisförmig ist.

5. Pflanzwerkzeug nach Anspruch 4, wobei die Lösestange (47) ferner dazu ausgelegt ist, die Bewegung der beweglichen Backe (43) zu steuern, und wobei das Pflanzwerkzeug ferner einen Arm (26) umfasst, der an der Lösestange (47) befestigt und dazu ausgelegt ist, auf den Bolzen (23) zu wirken, um die Drehung des Dosierrads (15) auszulösen, wodurch ein gleichzeitiger Vorgang des Öffnens der beweglichen Backe (43) und Freigebens der festgelegten Menge an Düngemittel aus dem Spenderauslass (13) in das Rohr (41) vorgesehen wird.

6. Pflanzwerkzeug nach einem der vorstehenden Ansprüche, wobei der Spender dazu ausgelegt ist, lösbar an dem hohlen Rohr des Pflanzwerkzeugs befestigt zu sein.

## Revendications

1. Outil de plantation comprenant :
un tube creux (41) destiné à recevoir un semis ;
une mâchoire mobile (43) placée au niveau d'une partie d'extrémité du tube creux ;
une pédale (45) conçue pour déplacer la mâchoire mobile lorsqu'elle reçoit une pression vers le bas, de façon à permettre au semis de sortir du tube creux ;
une tige de libération (47) raccordée de manière fonctionnelle à la mâchoire mobile ; et
un dispositif de distribution (10) conçu pour fournir une quantité prédéterminée d'engrais granulé au semis lors de la plantation du semis, le dispositif de distribution comprenant :
un logement (11) comportant une entrée (12) destinée à recevoir un récipient contenant l'engrais granulé et une sortie (13) raccordée au tube creux, et
un mécanisme de dosage placé dans le logement et conçu pour acheminer la quantité prédéterminée de l'engrais granulé de l'entrée (12) à la sortie (13),
**caractérisé en ce que** la tige de libération est conçue pour effectuer un mouvement alternatif le long du tube creux lors du déplacement de la mâchoire mobile, et **en ce que** la tige de libération est raccordée de manière fonctionnelle au mécanisme de dosage de telle sorte que, lors du déplacement de la mâchoire mobile, le mécanisme de dosage effectue un mouvement de va-et-vient afin d'amener la quantité prédéterminée de l'engrais granulé dans le tube creux à travers la sortie.

2. Outil de plantation selon la revendication 1, dans lequel le mécanisme de dosage du dispositif de distribution (10) comprend une roue de dosage (15) comportant un espace de dosage (16), l'espace de dosage comportant un fond cunéiforme de telle sorte que, d'un côté, l'espace de dosage soit aligné avec une surface cylindrique extérieure de la roue de dosage et, du côté opposé, l'espace de dosage soit renfoncé par rapport à la surface cylindrique extérieure.

3. Outil de plantation selon la revendication 2, dans lequel la surface cylindrique extérieure de la roue de dosage (15) comprend une échancrure placée à l'opposé de l'espace de dosage (16).

4. Outil de plantation selon la revendication 2 ou 3, comprenant en outre un boulon (23) servant à actionner la roue de dosage (15), dans lequel le boulon est fixé à la roue de dosage (15) et s'étend à travers une ouverture dans le logement (11) du dispositif de distribution, l'ouverture (22) présentant une forme semi-circulaire.

5. Outil de plantation selon la revendication 4, dans lequel la tige de libération (47) est conçue en outre pour commander le déplacement de la mâchoire mobile (43), et l'outil de plantation comprenant en outre un bras (26) attaché à la tige de libération (47) et conçu pour agir sur le boulon (23) pour entraîner la rotation de la roue de dosage (15), de façon à réaliser une action simultanée d'ouverture de la mâchoire mobile (43) et de libération de la quantité prédéterminée d'engrais depuis la sortie (13) du dispositif de distribution dans le tube (41).

6. Outil de plantation selon l'une quelconque des revendications précédentes, dans lequel le dispositif de distribution est conçu pour être attaché de manière libérable au tube creux de l'outil de plantation.
